# EUROPÄISCHE PATENTSCHRIFT

(11) **EP 2 046 514 B1**
(45) Veröffentlichungstag und Bekanntmachung des Hinweises auf die Patenterteilung: **08.12.2010**
(21) Anmeldenummer: 07801206.9
(22) Anmeldetag: 01.08.2007
(51) Int. Cl.: B21H 3/02, F16B 23/00, F16B 35/04, F16B 41/00, F16B 43/00

(54) **SCHRAUBE, BOLZEN ODER SCHLIESSRINGBOLZEN**
SCREW, BOLT OR LOCKING RING BOLT
VIS, BOULON OU BOULON DE BAGUE DE FERMETURE

(30) Priorität: 04.08.2006 DE 202006011950 U
(43) Veröffentlichungstag der Anmeldung: 15.04.2009
(73) Patentinhaber: Acument GmbH & Co. OHG, 56567 Neuwied (DE)
(72) Erfinder: KUPCZYK, Robert, 41748 Viersen (DE)
(74) Vertreter: Beck, Alexander
(86) Internationale Anmeldenummer: PCT/DE2007/001368
(87) Internationale Veröffentlichungsnummer: WO 2008/014778

(56) Entgegenhaltungen:
- EP-A- 1 174 283
- DE-A1- 3 715 420
- US-A- 2 136 523

## Beschreibung

Die vorliegende Erfindung betrifft eine Schraube, einen Bolzen oder Schließringbolzen. Bei diesen Produkten besteht weltweit ein erheblicher Wettbewerb. Die Preise dieser Produkte sind daher sehr niedrig und es ist daher Aufgabe der vorliegenden Erfindung, eine Schraube, einen Bolzen oder einen Schließringbolzen zu schaffen, die wesentlich preisgünstiger herzustellen sind.

Gemäß dem Stand der Technik wurden solche Verbindungselemente, wie die genannten Schrauben, Bolzen oder Schließringbolzen seit mehr als 100 Jahren durch Pressen (Kaltumformen) hergestellt. Dies war bisher die preisgünstigste Möglichkeit zur Herstellung dieser Produkte. Lediglich für die Gewinde von Schrauben oder Bolzen wurde Walzen als Herstellungsprozess eingesetzt.

Ausgehend von diesem Stand der Technik wurde erfindungsgemäß erstmals erkannt, dass es möglich ist, Schrauben, Bolzen oder Schließringbolzen ausschließlich durch Walzen in einem einzigen Fertigungsschritt herzustellen. Dabei kann die Schraube, der Bolzen oder Schließringbolzen durch einen einzigen Fertigungsschritt des Walzens hergestellt sein, wobei auch ein entsprechender Außenkraftangriff, wie beispielsweise ein Sechskant, ein hexalobulärer (Sechsrund-) Kraftangriff oder ein Außenvielzahnkraftangriff, in dem einen gleichen Herstellungsschritt des Walzens hergestellt sein kann.

Erfindungsgemäß kann selbst ein Flansch bei den Schrauben oder Bolzen gewalzt sein. Erfindungsgemäß kann dieser Walzprozess sogar so ausgebildet werden, däss die Schraube oder der Bolzen in dem einen Fertigungsschritt mit einer unverlierbaren Beilegscheibe versehen werden kann. Auf diese Weise kann die erfindungsgemäße Schraube, der erfindungsgemäße Bolzen oder Schließringbolzen in einem einzigen Herstellungsschritt vollständig mit Gewinde, Kraftangriff, Flansch und gegebenenfalls unverlierbar angebrachter Beilagscheibe gewalzt werden. Auf diese Weise kann die Herstellung der erfindungsgemäßen Schraube, des erfindungsgemäßen Bolzens oder Schließringbolzens erheblich verbilligt und vereinfacht werden, da die entsprechende Press- beziehungsweise Kaltumformprozesse und die üblicherweise daran anschließenden Waschprozesse bei der Herstellung des erfindungsgemäßen Verbindungselementes vollständig entfallen können.

Vorteilhafterweise können bei der Herstellung eines erfindungsgemäßen Verbindungselementes auch die Verfahrensschritte der Dephosphatierung und der Wärmebehandlung entfallen, sofern ein Stahl verwendet wird, dessen Kaltverfestigung während der Kaltumformung ausreichend groß ist, um die erforderlichen Festigkeitswerte für das erfindungsgemäße Verbindungselement zu erhalten. Beispielsweise eignen sich hierfür Stähle und Herstellungsverfahren, wie sie bereits in dem deutschen Gebrauchsmuster 20 2005 015 611 U1 beschrieben sind.

Auf diese Weise können erfindungsgemäße Schrauben, Bolzen oder Schließringbolzen mit einem einzigen Herstellungsschritt, nämlich dem Walzen hergestellt werden. Dies ist dann der absolut preisgünstigste Weg zur Herstellung solcher Verbindungselemente.

Die erfinderische Idee der vorliegenden Erfindung beruht darauf, erkannt zu haben, dass aus geeigneten Stählen hergestellte Schrauben, Bolzen oder Schließringbolzen ausschließlich durch eine Walzoperation ohne Pressoperationen hergestellt werden können.

Walzverfahren waren im Stand der Technik ausschließlich für Zahnräder und für die Außengewinde von Schrauben bekannt.

Die erfindungsgemäßen Schrauben, Bolzen oder Schließringbolzen können direkt aus dem Rohdraht nach Zuschneiden des Rohdrahts auf geeignete Länge durch Walzen hergestellt werden. Zusätzlich kann der Walzmaschine eine entsprechende Beilagscheibe zugeführt werden, wenn diese an dem Verbindungselement unverlierbar befestigt werden sol.

Die vorliegende Erfindung soll im folgenden anhand der in den Zeichnungen dargestellten Ausführungsbeispiele näher erläutert werden. Es zeigt:
Figur 1 eine erfindungsgemäße Schraube und
Figur 2 einen erfindungsgemäßen Schließringbolzen.

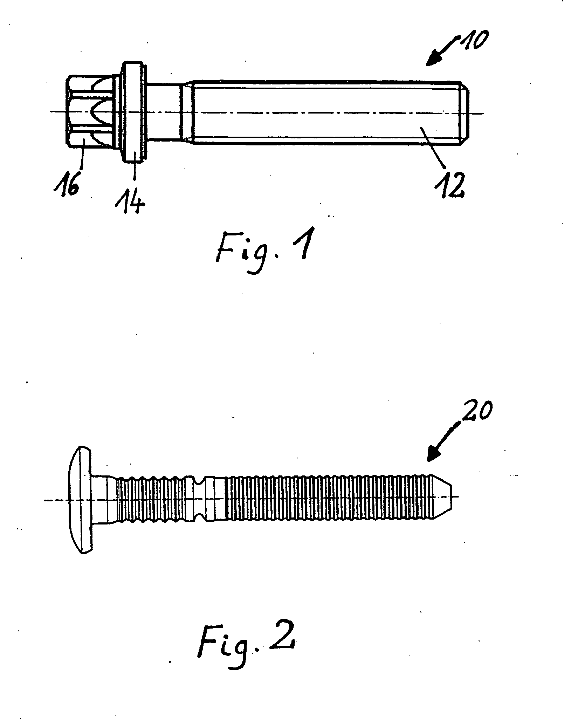

Figur 1 zeigt eine erfindungsgemäße Schraube 10, die vollständig in einem einzigen Fertigungsschritt des Walzens aus einem Drahtstück geeigneter Länge hergestellt ist. In einem einzigen Walzschritt wurde das Außengewinde 12, der Flansch 14 und der hexalobuläre (Außensechsrund-) Kraftangriff 16 gefertigt.

Figur 2 zeigt einen ebenfalls in einem einzigen Fertigungsschritt durch Walzen gefertigten Schließringbolzen 20.

Beide erfindungsgemäßen Verbindungselemente sind dabei in einem einzigen Fertigungsschritt ausschließlich durch Walzen hergestellt und ihre Festigkeit beruht ausschließlich auf der Kaltverfestigung während der Umformung. Zu diesem Zweck sind sie aus einem Stahl hergestellt, wie er beispielsweise in dem deutschen Gebrauchsmuster 20 2005 015 611 U1 beschrieben ist. Selbstverständlich können auch andere geeignete Stähle Verwendung finden.

## Patentansprüche

1. Schraube (10), Bolzen oder Schließringbolzen (20) mit einem deutlich breiteren Kopf (14, 16) und einem Gewindeträger (12), **dadurch gekennzeichnet, dass** sie oder er direkt aus dem Rohdraht nach dem Zuschneiden des Rohdrahts auf geeignete Länge ausschließlich durch einen einzigen Fertigungsschritt des Walzens hergestellt ist.

2. Schraube (10), Bolzen oder Schließringbolzen (20) nach Anspruch 1, **dadurch gekennzeichnet, dass** sie oder er einen Außenkraftangriff (16), beispielsweise einen Sechskann-, hexalobulären (Sechsrund-) Kraftangriff oder Außenvielzahnkraftangriff aufweist.

3. Schraube (10), Bolzen oder Schließringbolzen (20) nach Anspruch 1 oder 2, **dadurch gekennzeichnet, dass** seine/ihre Festigkeit ausschließlich auf der Kaltverfestigung während der Umformung beruht.

4. Schraube (10), Bolzen oder Schließringbolzen (20) nach Anspruch 1, 2 oder 3, **dadurch gekennzeichnet, dass** sie oder er während des Walzens mit einer unverlierbaren Beilagscheibe versehen worden ist.

5. Schraube (10) oder Bolzen nach Anspruch 1, 2 oder 3, **dadurch gekennzeichnet, dass** ein Flansch (14) zwischen Kraftangriff (16) und Gewindeträger (12) angeordnet ist.

6. Verfahren zur Herstellung einer Schraube (10), eines Bolzens oder eines Schließringbolzens (20) mit einem deutlich breiteren Kopf (14, 16) und einem Gewindeträger (12), **dadurch gekennzeichnet, dass** die Schraube (10), der Bolzen oder der Schließringbolzen (20) direkt aus dem Rohdraht nach dem Zuschneiden des Rohdrahts auf geeignete Länge ausschließlich durch einen einzigen Fertigungsschritt des Walzens hergestellt werden.

7. Verfahren nach Anspruch 6, **dadurch gekennzeichnet, dass** bei der Herstellung ein Außenkraftangriff (16), beispielsweise ein Sechskant-, hexalobulären (Sechsrund-) Kraftangriff oder Außenvielzahnkraftangriff durch Walzen hergestellt wird.

8. Verfahren nach Anspruch 5 oder 6, **dadurch gekennzeichnet, dass** die Festigkeit der Schraube (10), des Bolzens oder des Schließringbolzens (20) ausschließlich mittels der Kaltverfestigung während der Umformung beim Walzen erzeugt wird.

9. Verfahren nach einem der Ansprüche 6, 7 oder 8, **dadurch gekennzeichnet, dass** während des Walzvorgangs eine Beilagscheibe unverlierbar an der Schraube (10), dem Bolzen oder dem Schließringbolzen angebracht wird.

10. Verfahren nach einem der Ansprüche 6, 7 oder 8, **dadurch gekennzeichnet, dass** während der Walzvorgänge ein Flansch (14) zwischen Kraftangriff (16) und Gewindeträger (12) hergestellt wird.

## Claims

1. Screw (10), bolt or locking ring bolt (20) having a notably broader head (14, 16) and a bearer (12) of the thread, **characterized in that** the same directly from raw wire after cutting the raw wire to a suitable length exclusively is produced in a singular manufacturing step of rolling.

2. Screw (10), bolt or locking ring bolt (20) according to claim 1, **characterized in that** the same is having an exterior force application point (26), for example a hexagonal, hexalobular (hex-round) force application point or exterior multiple teeth force application.

3. Screw (10), bolt or locking ring bolt (20) according to claim 1 or 2, **characterized in that** the strength of the same exclusively is based on the cold work hardening during the forming operation.

4. Screw (10), bolt or locking ring bolt (20) according to claim 1, 2 or 3, **characterized in that** the same during the rolling has been provided with a captured washer.

5. Screw (10) or bolt according to claim 1, 2 or 3, **characterized in that** a flange (14) is positioned between the force application point (16) and the bearer (12) of the thread.

6. A method for the production of a screw (10, a bolt or a locking ring bolt (20) having a notably broader head (14, 16) and a bearer (12) of the thread, **characterized in that** the screw (10), the bolt or the locking ring bolt (20) directly from the raw wire after the cutting of the raw wire to a suitable length exclusively are produced by a singular production step of rolling.

7. A method according to claim 6, **characterized in that** during the production an exterior force application point (16), for example a hexagonal, hexalobulaire (hex-round) force application point or an exterior multiple teeth force application point is produced by rolling.

8. A method according to claim 5 or 6, **characterized in that** the strength of the screw (10) of the bolt or of the locking ring bolt (20) exclusively is produced by means of the cold work hardening during the forming operation by rolling.

9. A method according to any of the claims 6, 7 or 8, **characterized in that** during the rolling procedure a washer captively is attached to the screw (10), the bolt or the locking ring bolt (20).

10. A method according to any of the claims 6, 7 or 8, **characterized in that** during the rolling procedures a flange (14) is produced between the force application point (16) and the bearer (12) of the thread.

## Revendications

1. Vis (10), boulon ou boulon à sertir (20) avec une tête nettement plus large (14, 16) et un support fileté (12), **caractérisé**(e) en ce qu'elle ou il est fabriqué directement à partir du fil métallique brut, exclusivement en une seule étape de fabrication par laminage, après découpe à dimension du fil métallique brut à la longueur adéquate.

2. Vis (10), boulon ou boulon à sertir (20) selon la revendication 1, **caractérisé**(e) en ce qu'elle ou il comporte une surface d'application d'une force extérieure (16), par exemple à six pans, hexalobulaire (en étoile) ou à cliquet.

3. Vis (10), boulon ou boulon à sertir (20) selon la revendication 1 ou 2, **caractérisé**(e) en ce que sa solidité repose uniquement sur l'écrouissage pendant la déformation.

4. Vis (10), boulon ou boulon à sertir (20) selon la revendication 1 ou 2 ou 3, **caractérisé**(e) en ce que pendant le laminage, il ou elle est muni(e) d'une rondelle imperdable.

5. Vis (10) ou selon la revendication 1, 2 ou 3, **caractérisé en ce qu'**une bride (14) est disposée entre la surface d'application de force (16) et le support fileté (12).

6. Procédé de fabrication d'une vis (10), d'un boulon ou d'un boulon à sertir (20) avec une tête nettement plus large (14, 16) et un support fileté (12), **caractérisé en ce que** la vis (10), le boulon ou le boulon à sertir (20) sont fabriqués directement à partir du fil métallique brut, exclusivement en une seule étape de fabrication par laminage, après découpe à dimension du fil métallique brut à la longueur adéquate.

7. Procédé selon la revendication 6, **caractérisé en ce que** lors de la fabrication, une surface d'application de force (16), par exemple à six pans, hexalobulaire (en étoile) ou à cliquet est fabriquée par laminage.

8. Procédé selon la revendication 5 ou 6, **caractérisé en ce que** la solidité de la vis (10), du boulon ou du boulon à sertir (20) est créée uniquement au moyen de l'écrouissage pendant la déformation.

9. Procédé selon l'une quelconque des revendications 6, 7 ou 8, **caractérisé en ce que** pendant le processus de laminage, on monte une rondelle de façon imperdable sur la vis (10), le boulon ou le boulon à sertir (20).

10. Procédé selon l'une quelconque des revendications 6, 7 ou 8, **caractérisé en ce que** pendant les processus de laminage, on fabrique une bride (14) entre la surface d'application de force (16) et le support fileté (12).
